# EUROPÄISCHE PATENTANMELDUNG

(11) **EP 4 614 059 A1**
(43) Veröffentlichungstag der Anmeldung: **10.09.2025**
(21) Anmeldenummer: 25160164.7
(22) Anmeldetag: 26.02.2025
(51) Int. Cl.: F21S 8/06, F21V 21/03, F21V 21/112, F16B 5/10, F21V 15/01, F21V 27/02, F21Y 115/10

(54) **LEUCHTENEINRICHTUNG, INSBESONDERE PENDEL- ODER DECKENLEUCHTE**

(30) Priorität: 01.03.2024 DE 102024106032
(71) Anmelder: Trilux GmbH & Co. KG, 59759 Arnsberg (DE)
(72) Erfinder: Schultz, Thomas, 58093 Hagen (DE); Wiethoff, Louis, 57392 Schmallenberg (DE)
(74) Vertreter: Lippert Stachow Patentanwälte Rechtsanwälte

(57) **Zusammenfassung**

Die Erfindung betrifft eine Leuchteneinrichtung, umfassend ein rohrartiges Gehäuse mit Stirnseitenabschnitten, wobei an einem der Stirnseitenabschnitten eine Leuchtmittelanordnung umfassend zumindest ein Leuchtmittel zur Abgabe von Licht, sowie zumindest eine zur Leuchtmittelanordnung in Lichtrichtung nachgeschaltete Optikeinrichtung angeordnet ist, wobei an dem anderen Stirnseitenabschnitt des Gehäuses ein Leuchtenversorgungszugang zur Durchführung eines elektrischen Versorgungskabels in das Gehäuse umfasst ist, und der Leuchtenversorgungszugang ein Montageelement aufweist, das eine Öffnung zur Durchführung des Versorgungskabels umfasst, und das Montageelement ein Montageblech aufweist, das umfangsseitig eine Verbindungseinrichtung umfasst, die mit einer zugeordneten Verbindungseinrichtung des Gehäuses zum mechanischen Koppeln von Gehäuse und Montageelement zusammenwirkt. Die Verbindungseinrichtung des Montageblechs mit der Verbindungseinrichtung des Gehäuses wirken in einer Schließposition gewindefrei zum mechanischen Koppeln von Gehäuse und Montageelement zusammen, wobei die Verbindungseinrichtung des Gehäuses sowie die Verbindungseinrichtung des Montageblechs ausgehend von einer Offenposition durch eine relative Drehung von Gehäuse und Montageblech zueinander in die Schließposition bringbar sind, bei welcher sich das Montageblech und das Gehäuse in einem Formschluss in axialer Richtung und in einer Drehverrastung zueinander befinden.

## Beschreibung

Die Erfindung betrifft eine Leuchteneinrichtung, insbesondere eine Pendel- oder Deckenleuchte umfassend ein rohrartiges Gehäuse mit zueinander gegenüberliegend angeordneten Stirnseitenabschnitten, wobei an einem der Stirnseitenabschnitte eine Leuchtmittelanordnung umfassend zumindest ein Leuchtmittel zur Abgabe von Licht, insbesondere ein LED-Leuchtmittel, sowie zumindest eine zur Leuchtmittelanordnung in Lichtrichtung nachgeschaltete Optikeinrichtung angeordnet ist, wobei an dem anderen Stirnseitenabschnitt des Gehäuses ein Leuchtenversorgungszugang zur Durchführung eines elektrischen Versorgungskabels in das Gehäuse umfasst ist, und der Leuchtenversorgungszugang ein Montageelement umfasst, das eine Öffnung zur Durchführung des Versorgungskabels aufweist, und das Montageelement ein Montageblech aufweist, das umfangsseitig eine Verbindungseinrichtung umfasst, die mit einer zugeordneten Verbindungseinrichtung des Gehäuses zum mechanischen Koppeln von Gehäuse und Montageelement zusammenwirkt.

Derartige Leuchteneinrichtungen sind auf dem Gebiet wohlbekannt. Beispielsweise kann vorgesehen sein, dass am Gehäuse umfänglich in einer axialen Ebene am rohrartigen Gehäuse angeordnete und sich radial nach innen erstreckende Schrauben vorgesehen sind, die sich in Einbaulage in das Montagelement hinein erstrecken und darüber eine stabile Verbindung zwischen Gehäuse und Montageelement bereitgestellt ist. In einer anderen Ausführungsform kann auch vorgesehen sein, dass das Montageelement an seiner Stirnfläche ein umlaufendes Gewinde aufweist, das mit einem an der anderen Stirnseite des Gehäuses angeordneten Innengewinde korrespondiert, derart, dass das Montageelement an dem besagten Stirnseitenabschnitt in das Gehäuse einschraubbar ist.

In der erstgenannten herkömmlichen Ausführungsform ist das optische Erscheinungsbild der Leuchteneinrichtung durch die von außen sichtbaren Schrauben gestört, in der zweiten beschriebenen Ausführungsform ist die beschriebene Gewindeverbindung zwischen Montageelement und Gehäuse nur durch Selbsthemmung gesichert, ferner ist die Montage einer solchen Leuchteneinrichtung vergleichsweise zeitaufwendig.

Der vorliegenden Erfindung liegt die Aufgabe zugrunde, eine herkömmliche Leuchteneinrichtung so weit zu verbessern, dass die beschriebenen Nachteile herkömmlicher Leuchteneinrichtungen zumindest teilweise behoben sind.

Diese Aufgabe löst die vorliegende Patentanmeldung durch eine Leuchteneinrichtung mit den Merkmalen von Anspruch 1. Die erfindungsgemäße Leuchteneinrichtung umfasst ein rohrartiges Gehäuse mit zueinander gegenüberliegend angeordneten Stirnseitenabschnitten, wobei an einem der Stirnseitenabschnitten eine Leuchtmittelanordnung umfassend zumindest ein Leuchtmittel zur Abgabe von Licht, insbesondere ein LED-Leuchtmittel, sowie zumindest eine zur Leuchtmittelanordnung in Lichtrichtung nachgeschaltete Optikeinrichtung wie eine optische Abdeckung angeordnet ist, wobei an dem anderen Stirnseitenabschnitt des rohrartigen Gehäuses ein Leuchtmittelversorgungszugang zur Durchführung eines elektrischen Versorgungskabels in das Gehäuse umfasst ist, und der Leuchtmittelversorgungszugang ein stirnseitig angeordnetes Montageelement aufweist, das eine Öffnung zur Durchführung des Versorgungskabels umfasst, und das Montageelement ein Montageblech aufweist, das umfangsseitig eine Verbindungseinrichtung umfasst, die mit einer zugeordneten Verbindungseinrichtung des Gehäuses zum mechanischen Koppeln von Gehäuse und Montageelement zusammenwirkt. Die erfindungsgemäße Leuchteneinrichtung zeichnet sich dadurch aus, dass die Verbindungseinrichtung des Montageblechs mit der zugeordneten Verbindungseinrichtung des Gehäuses in einer Schließposition gewindefrei zum mechanischen Koppeln von Gehäuse und Montageelement zusammenwirken, wobei die Verbindungseinrichtung des Gehäuses und die Verbindungseinrichtung des Montageblechs ausgehend von einer Offenposition durch eine relative Drehung von Gehäuse- und Montageblech zueinander um eine Achse des Gehäuses in die Schließposition bringbar sind, bei welcher sich das Montageblech und das Gehäuse in einem Formschluss in axialer Richtung und in einer Drehverrastung zueinander befinden.

Durch die Gestaltung der erfindungsgemäßen Leuchteneinrichtung kann in Bezug auf die Befestigung von Montageelement und rohrartigem Gehäuse in einer relativen Schließlage ein nicht durch Befestigungsschrauben gestörter optischer Eindruck der Einrichtung sowie eine sichere, übliche Betriebskräfte aufnehmende mechanische Kopplung bereitgestellt werden, die darüber hinaus durch eine einfache relative Bewegung zwischen Montageelement und Gehäuse einstellbar ist. Durch das Vorsehen eines Formschlusses zwischen Montageblech und Gehäuse sowohl in axialer Richtung als auch in Drehrichtung, kann eine sichere Befestigung der beiden Teile aneinander bereitgestellt werden.

Die Angabe "Stirnseitenabschnitt" des Gehäuses kann einen jeweiligen Längsabschnitt des Gehäuses ausgehend von einer der beiden (offenen) Stirnseiten des rohrartigen Gehäuses meinen, wobei ein solcher Stirnseitenabschnitt ohne Weiteres 50 % oder mehr der gesamten Längserstreckung des rohrartigen Gehäuses umfassen kann. In dieser Festlegung können die beiden Stirnseitenabschnitte des Gehäuses insofern eine unterschiedliche Erstreckung in Längsrichtung des Gehäuses aufweisen.

Es kann vorgesehen sein, dass das Montagelement das besagte Montageblech umfasst, wobei Funktionsabschnitte des Montageelements durch Blechumformungen am Montageblech und/oder durch an das Montageblech befestigte Funktionselemente wie z.B. ein Federelement, ausgebildet sein können.

Zweckmäßigerweise kann vorgesehen sein, dass die erfindungsgemäße Leuchteneinrichtung ausgebildet und eingerichtet ist, Licht an einer der beiden Stirnflächen des rohrartigen Gehäuses auszugeben.

Weitere erfindungsgemäße Merkmale sowie Weiterbildungen der Erfindung sind in der nachfolgenden allgemeinen Beschreibung, den Figuren, der Figurenbeschreibung sowie den Unteransprüchen angegeben.

Um insbesondere bei hohen Betriebskräften die Verbindung von Montageelement und rohrartigem Gehäuse aufrechtzuerhalten, beispielsweise bei einem unbeabsichtigten Stoß an die als Pendelleuchte ausgebildete Leuchteneinrichtung, kann zweckmäßigerweise vorgesehen sein, dass die angegebenen Formschlüsse zwischen den beiden Bauteilen der erfindungsgemäßen Leuchteneinrichtung in axialer Richtung und in Bezug auf die Drehverrastung in Umfangsrichtung durch unterschiedliche, einander zugeordnete Formschlusselemente am Montageelement und am Gehäuse bereitgestellt sind. Zu diesem Zweck kann vorgesehen sein, dass die beiden Verbindungseinrichtungen in der Schließposition von Montageelement und Gehäuse einander zugeordnete und zusammenwirkende erste Formschlusselemente zur Bereitstellung des Formschlusses in axialer Richtung zwischen Montageelement und Gehäuse sowie einander zugeordnete zweite Formschlusselemente zur Bereitstellung der Drehverrastung zwischen Montageelement und Gehäuse aufweisen. Dabei kann vorgesehen sein, dass erste und zweite Formschlusselemente am Montageelement und am Gehäuse in Schließposition jeweils in Axialrichtung übereinander und innerhalb eines gemeinsamen Umfangsabschnittes angeordnet sind.

Einander zugeordneten und zusammenwirkenden Formschlusselemente können beispielsweise als Rastausnehmung und zugeordnetes Rastelement ausgebildet sein zur Bereitstellung der beschriebenen Drehverrastung beider Teile zueinander in der Schließposition, bei welcher das Rastelement in der zugeordneten Rastausnehmung angeordnet ist. Als weitere, einander zugeordnete bzw. komplementär wirkende Formschlusselemente kann beispielsweise ein axialer Hinterschnitt, insbesondere in Form einer Schlitzausnehmung, und ein diesem zugeordneter Radialflansch dienen, wobei der Radialflansch in Schließposition beider Formschlusselemente in die Schlitzausnehmung hineinragt, so dass ein axialer Formschluss zwischen Schlitzausnehmung und Radialflansch bereitgestellt ist.

Die angegebene Anordnung der ersten und zweiten Formschlusselemente am Montageelement und der zugeordneten ersten und zweiten Formschlusselemente am Gehäuse, jeweils in Axialrichtung übereinander und innerhalb eines gemeinsamen Umfangsabschnitts, kann die Ineingriffbringung des Gehäuses und des Montageelements dadurch erleichtern, dass in einer Offenstellung die Verbindungseinrichtungen von Gehäuse und Montageelement so gestaltet sind, dass Gehäuse und Montageelement nach einer koaxialen Ausrichtung zueinander, axial aufeinander zu bewegbar bis in eine axiale Endlage entsprechend der Schließlage bringbar sind, so dass nach der angegebenen relativen koaxialen Ausrichtung und Aufeinanderzubewegung von Montagelement und Gehäuse allein eine relative Verdrehung von Montageelement und Gehäuse zum Einstellen der Schließlage notwendig ist und damit zur Gestaltung der beschriebenen Formschlüsse bzw. zur Einstellung der Schließposition in axialer Richtung und einer Drehverrastung von Montageelement und Gehäuse zueinander.

Die Angabe "Drehverrastung" von Montageelement und Gehäuse zueinander meint, dass durch eine Verdrehung der beiden Teile zueinander eine gegenseitige Verrastung eingestellt ist, bei welcher ein an einem der beiden Bauteile angeordnetes Rastelement in eine an dem anderen Bauteil angeordnete Rastausnehmung einrastet, derart, dass beispielsweise eine weitergehende Verdrehung der beiden Bauteile zueinander verhindert ist bzw. eine gegenseitige Drehlage von Montageelement und Gehäuse eingestellt ist, aus welcher die beiden Teile nur durch Aufbringen eines erhöhten Drehmoments herausbewegbar sind.

Zweckmäßigerweise kann vorgesehen sein, dass zur Bereitstellung der beschriebenen Drehverrastung zwischen Montageelement und Gehäuse eine der Verbindungseinrichtungen als Rastelement zumindest ein radial auslenkbares Federelement aufweist, das an einer umfänglich erstreckenden Steuerfläche der anderen Verbindungseinrichtung in Einbaulage abgestützt ist, wobei die Steuerfläche zumindest abschnittsweise in ihrer Radialhöhe variiert zur Bereitstellung einer vorgegebenen Haptik und/oder Anzeige des Erreichens der Drehverrastung in der Schließposition zwischen Gehäuse und Montageelement.

Diese Radialhöhe der Steuer- bzw. Lauffläche für das Federelement kann als radialer Abstand der Steuer- bzw. Lauffläche von einer Achse des Gehäuses festgelegt sein.

Die besagte Steuerfläche kann insofern als Lauffläche für das elastisch in radialer Richtung auslenkbare Federelement ausgebildet sein. Das Zusammenwirken des radial auslenkbaren Federelements mit der Steuer- oder Lauffläche, an welchem sich das Federelement bei einer gegenseitigen Verdrehung von Montageelement und Gehäuse abstützt, kann so gestaltet sein, dass abhängig von der Radialhöhe der Lauffläche durch eine elastische Auslenkung des Federelements Energie im Federelement speicherbar ist. Diese im Federelement gespeicherte Energie ist abhängig von der relativen Lage des Federelements zur Steuerfläche und damit abhängig von einer gegenseitigen Drehlage von Montageelement und Gehäuse die abgebbar, so dass durch Vorgabe eines Verlaufs der Steuerfläche in Bezug auf die Radialhöhe die im Federelement gespeicherte Energie einstellbar ist, was eine vorgegebene Haptik bei der gegenseitigen Verdrehung von Montageelement und Gehäuse zueinander hervorrufen kann. Insofern kann durch eine vorgegebene Gestaltung des Verlaufs der Steuer- bzw. Lauffläche in Bezug auf deren Radialhöhe über einen Umgangsabschnitt eine Speicherung, Beibehaltung und/oder und Abgabe der elastischen Energie im Federelement und damit eine vorgegebene Haptik bei der Betätigung gestaltet sein. Vorzugsweise kann vorgesehen sein, dass die Radialhöhe der Steuerfläche gemessen von einer Achse des Gehäuses in einem Umfangsabschnitt des Gehäuses am größten ist, in welchem eine Offenposition zwischen Gehäuse und Montageelement festgelegt ist, bei welcher die beiden Bauteile axial aufeinander zu bewegbar ausgebildet sind, insbesondere um die obenstehend beschriebene axiale Endposition zwischen Montageelement und Gehäuse einzustellen. Dabei ist aus dieser Offenposition die Gestaltung vorzugsweise derart, dass durch eine einfache relative Verdrehung von Montageelement und Gehäuse die angegebene Schließposition zwischen den beiden Bauteilen einstellbar ist. Zweckmäßigerweise kann vorgesehen sein, dass das auslenkbare Federelement am Montageelement angeordnet ist und entsprechend die diesem zugeordnete Steuer- bzw. Lauffläche an der Innenseite des Gehäuses.

Vorzugsweise kann vorgesehen sein, dass das elastisch auslenkbare Federelement in Einbaulage in einem Schnitt senkrecht zur Längsachse des Gehäuses eine dreieckige, offene Grundform aufweist mit einem insbesondere ebenen Befestigungsabschnitt und einem sich daran anschließenden, freitragenden Federarm, die zwei insbesondere ebene Führungsabschnitte aufweisen können, die einen Winkel von etwa 90° zueinander aufweisen und in ihrem Verbindungsbereich den Anlagebereich des Federelements an der Steuerfläche bzw. Lauffläche festlegen.

In einer besonders zweckmäßigen Ausführungsform kann vorgesehen sein, dass die Radialhöhe der Steuerfläche gemessen von einer Achse des Gehäuses in einem Umfangsabschnitt, welcher der Offenposition entspricht, am größten ist, wobei sich die Radialhöhe in Richtung zur Schließposition der Steuerfläche vermindern kann und sich dann wieder bei Erreichen der Schließposition erhöhen kann zur Bereitstellung einer Rastausnehmung als Teil der Steuer-bzw. Lauffläche im Bereich der Schließposition.

Vorzugsweise kann vorgesehen sein, dass die angegebene Drehverrastung zwischen Montageelement und Gehäuse durch Aufbringen eines erhöhten Drehmoments zwischen Montageelement und Gehäuse auflösbar, insbesondere werkzeuglos auflösbar ist.

Wie dargestellt, kann zweckmäßigerweise vorgesehen sein, dass die an dem anderen Stirnseitenabschnitt des Gehäuses angeordnete Verbindungseinrichtung des Gehäuses zumindest teilweise, insbesondere vollständig, durch innenseitige Verdünnungen bzw. Ausnehmungen an einem Gehäusewandabschnitt des Gehäuses ausgebildet ist, insbesondere zur Ausbildung der beschriebenen Steuer- bzw. Lauffläche für das am Montageelement angeordnete elastisch auslenkbare Rast- bzw. Federelement. Dabei kann vorgesehen sein, dass die angegebenen innenseitigen Verdünnungen bzw. Ausnehmungen so gestaltet sind, dass sie keinen Durchbruch der Außenfläche des Gehäuses aufweisen, wobei der angegebene Gehäusewandabschnitt über einen vorgegebenen Längsabschnitt in Achsenrichtung des Gehäuses an dem einen Stirnseitenabschnitt und über einen vorgegebenen Umfangsabschnitt erstreckt. Aufgrund der beschriebenen Gestaltungen können insofern die Ausnehmungen bzw. Verdünnungen am Gehäusewandabschnitt umfänglich variieren zum Einstellen und Realisieren der angegebenen Schließposition zwischen Montageelement und Gehäuse.

In einer besonders zweckmäßigen Ausführungsform kann vorgesehen sein, dass die Verbindungseinrichtung des Gehäuses die sich umfänglich erstreckende Steuer-bzw. Lauffläche aufweist, wobei die Steuerfläche zumindest einen Offenpositionsflächenabschnitt, insbesondere mit einer ersten radialen mittleren Höhe, festlegt, einen Mittenflächenabschnitt, insbesondere mit einer zweiten radialen mittleren Höhe, sowie einen Schließpositionsflächenabschnitt als Teilfläche einer Rastausnehmung, insbesondere mit einer dritten radialen mittleren Höhe festlegt. Dabei kann zwischen Mittenflächenabschnitt und Schließpositionsflächenabschnitt ein Übergangsflächenabschnitt vorgesehen sein, der ausgebildet und eingerichtet ist, bei einer relativen Verdrehung von Gehäuse und Montageblech ausgehend von der gegenseitigen Offenposition in die Schließposition eine elastische, druckbeaufschlagte Anlage des Federelements gegen den Übergangsflächenabschnitt durch elastische Entspannung des Federelements in ein Drehmoment zur Unterstützung der relativen Verdrehung von Gehäuse und Montageblech zu wandeln. Entsprechend kann der Übergangsflächenabschnitt ausgebildet und eingerichtet sein, dass bei einer relativen Verdrehung von Gehäuse und Montageblech ausgehend von der gegenseitigen Schließposition in die Offenposition eine elastische, druckbeaufschlagte Anlage des Federelements gegen den Übergangsflächenabschnitt durch elastische Auslenkung des Federelements ein Hemmmoment erzeugbar ist, das überwunden werden muss, wenn Gehäuse und Montageblech aus der gegenseitigen Schließposition herausbewegt werden. Anders ausgedrückt, die Gestaltung der beiden einander zugeordneten Verbindungseinrichtungen kann derart ausgebildet sein, dass beim Auflösen der gegenseitigen Schließposition von Gehäuse und Montageblech aufgrund der Anlage des Federelements am Übergangsflächenabschnitt Energie in das Federelement eingebracht werden muss, wodurch das Lösen der Schließposition zwischen Gehäuse und Montageelement nur mit einem erhöhten Kraftaufwand möglich ist.

Um einen ausreichenden Bauraum zur Gestaltung von ersten und zweiten Formschlusselementen an dem Montageblech bereitzustellen und/oder das Gehäuse in einem ersten Abschnitt an einem Stirnseitenabschnitt abzuschließen, kann zweckmäßigerweise vorgesehen sein, dass das Montageblech einen Schließabschnitt zur Festlegung einer Schließebene senkrecht zur Gehäuseachse aufweist und die Verbindungseinrichtung des Montageblechs zumindest einen zum Schließabschnitt axial und radial abgesetzten, insbesondere zum Schließabschnitt parallel verlaufenden Radialflanschabschnitt aufweist, der bei einer relativen Drehbewegung von Gehäuse und Montageelement zueinander in die Schließposition eingerichtet und ausgebildet ist zum Eintauchen in eine zugeordnete Schlitzaufnahme der Verbindungseinrichtung des Gehäuses. Zweckmäßigerweise kann dabei vorgesehen sein, dass der Radialabschnitt in der Schließposition von Montageelement und Gehäuse mit radial vorderen Abschnitten in eine zugeordnete Schlitzaufnahme der Gehäuseinnenwandung eintaucht, insbesondere derart, dass ein Hinterschnitt in axialer Richtung zwischen Montageelement und Gehäuse in der Schließposition für die ersten Formschlusselemente vorliegt.

Zur Bereitstellung eines Formschlusses der zweiten Formschlusselemente in der Schließposition von Montageelement und Gehäuse kann zweckmäßigerweise vorgesehen sein, dass der Schließabschnitt des Montageblechs mit dem zumindest einen Radialflanschabschnitt mittels eines axial verlaufenden Verbindungsabschnittes verbunden ist, wobei das zumindest eine Federelement an dem Verbindungsabschnitt angeordnet, insbesondere befestigt sein kann. Vorzugsweise kann dabei vorgesehen sein, dass das Federelement radial bis etwa zur radialen maximalen Erstreckung des Radialflanschabschnittes verläuft, wobei der Verbindungsabschnitt zwischen Schließabschnitt und Radialflanschabschnitt des Montageblechs bzw. Montageelements eben oder als Teilzylinderflächen ausgebildet sein kann.

Zur Sicherstellung, dass Montageelement und Gehäuse bei der Einstellung der Schließposition nicht über diese hinaus zueinander verdreht werden, kann zweckmäßigerweise vorgesehen sein, dass das Montageelement bzw. das Montageblech als Abschnitt von dessen Verbindungseinrichtung einen radial nach außen ragenden Anschlag aufweist, welcher mit einem am Gehäuse als Abschnitt von dessen Verbindungseinrichtung ausgebildetem Gegenanschlag zusammenwirkt zur Festlegung einer relativen Drehbeschränkung und/oder zur Festlegung der Schließposition zwischen Gehäuse und Montageelement.

Grundsätzlich kann es aus Sicherheitserwägungen und/oder aufgrund gesetzlicher Bestimmungen notwendig sein, die Bauteile der erfindungsgemäßen Leuchteneinrichtung, insbesondere solche, mit welchen ein Benutzer im Betrieb bzw. bei der Wartung in Kontakt kommen kann, mit einem Schutzleiter elektrisch zu verbinden. Beispielsweise kann vorgesehen sein, dass das Montageelement und das Federelement ein jeweiliges elektrisch leitendes Material umfassen, insbesondere aus einem solchen Material hergestellt sind, wobei das Montageelement und das Federelement elektrisch leitend miteinander verbunden sein können, und wobei das Montageelement und/oder das Federelement einen Schutzleiteranschluss zum Anschluss an einen Schutzleiter des Versorgungskabels aufweist bzw. aufweisen. In solchen Ausführungsformen, bei welchen das Gehäuse selbst wiederum ein elektrisch leitfähiges Material, beispielsweise ein Metall umfasst oder aus einem solchen hergestellt ist und das Federelement in Einbaulage und in allen Betriebsstellungen einen elektrischen Kontakt zwischen Federelement und Gehäuse bereitstellt, kann insofern auf einfache Weise beim Vorliegen eines Schutzleiterkontaktes des Federelements das Gehäuse durch den elektrischen Kontakt zwischen Federelement und Gehäuse Schutzleiter-kontaktiert sein.

Zweckmäßigerweise kann das Montageblech in einer besonderen Ausführungsform auch als Träger eines Vorschaltgeräts für die umfasste Leuchtmittelanordnung zur Bereitstellung einer zugeordneten elektrischen Versorgung ausgebildet sein. Dabei kann vorgesehen sein, dass ein solches elektrisches Vorschaltgerät an der der Leuchtmittelanordnung zugewandten Seite des Montageelements angeordnet ist. Je nach Ausführungsform kann das Montageelement ausgebildet, auch noch weitere elektrische bzw. elektronische Bauteile wie Sensoren, beispielsweise einen Bewegungssensor oder einen Lichtsensor zu tragen.

Zur Bereitstellung einer Abführung der Abwärme der Leuchtmittelanordnung kann die erfindungsgemäße Leuchteneinrichtung eine Kühlkörpereinrichtung aufweisen, die in dem rohrartigen Gehäuse angeordnet ist und mit der Leuchtmittelanordnung in einem Wärmekontakt zur Ableitung von Abwärme steht. Dabei kann ein elektrisch leitendes Kratzkontaktelement an der Kühlkörpereinrichtung befestigt sein, das sich zur Achse des Gehäuse radial über die Kühlkörpereinrichtung hinaus erstreckt und in Kontakt zur Innenfläche des Gehäuses steht, wobei das Kratzkontaktelement einen Schutzleiteranschluss zum Anschließen eines Schutzleiters des Versorgungskabels aufweisen kann. In einer Ausführungsform, bei welcher das Montageblech an den Schutzleiterkontakt angeschlossen ist und über das Federelement in elektrischer Verbindung zum Gehäuse angeordnet ist, kann unter Umständen auf das Anschließen des Kratzkontaktelements an den Schutzleiter des Versorgungskabels verzichtet werden, da der Schutzleiterkontakt über das Federelement zum Gehäuse und über das Kratzkontaktelement zur Kühlkörpereinrichtung verlaufen kann.

In Bezug auf die Gestaltung des Kratzkontaktelements kann zweckmäßigerweise vorgesehen sein, dass dieses in Einbaulage in axialer Richtung elastisch auslenkbar gestaltet ist. In einer Ausführungsform kann auch vorgesehen sein, dass die Kühlkörpereinrichtung als Abschnitt eines in das rohrartige Gehäuse einsetzbaren Leuchtkopfes gestaltet ist, welcher neben der Kühlkörpereinrichtung die Leuchtmittelanordnung sowie die Optikeinrichtung, beispielsweise in Form einer das Licht lenkenden optischen Einrichtung und/oder einer optischen Abdeckung umfassen kann.

Die erfindungsgemäße Leuchteneinrichtung kann insbesondere als Deckenleuchte oder als Pendelleuchte ausgebildet sein. In der letztgenannten Ausführungsform kann zweckmäßigerweise vorgesehen sein, dass das Montageelement bzw. das Montageblech in Einbaulage zur zugeordneten axialen Stirnfläche des Gehäuses, d. h. an der axialen Stirnfläche des Gehäuses, an welcher das Montageblech mit dem Gehäuse verbunden ist, abgesenkt ist. Hierdurch kann das Erscheinungsbild der Leuchteneinrichtung dadurch verbessert werden, dass das Montageblech als solches vollständig vom Gehäuse aufgenommen ist. Je nach Ausführungsform kann die als Pendelleuchte gestaltete erfindungsgemäße Leuchteneinrichtung mittels einer am Montageblech befestigten Seilkonstruktion oder mittels des Kabels von der Decke abhängbar gestaltet sein. In beiden Ausführungsformen kann das Montageelement eine Aufnahme zur Hindurcherstreckung und Befestigung einer Kabeltülle aufweisen, durch welche sich das Versorgungskabel erstreckt. Dabei kann vorgesehen sein, dass sich die Kabeltülle in Einbaulage in einen Achsenabschnitt des Gehäuses hinein erstreckt, in welchem die Verbindungseinrichtungen des Montageelements und des Gehäuses angeordnet sind, so dass der axiale Bauraum der axialen Erstreckung der Verbindungseinrichtungen radial innen genutzt werden kann, um die Kabeltülle am Montageelement und das Kabel selbst an der Kabeltülle zu befestigen, unter Umständen zur Aufnahme der gesamten Gewichtskraft der Leuchteneinrichtung und Befestigung der Leuchte an einer zugeordneten Einrichtung an einer Zimmerdecke.

In einer Ausführungsform, bei welcher das Versorgungskabel nicht zum Ableiten der Gewichtskraft der Leuchteneinrichtung eingesetzt ist, kann zweckmäßigerweise eine schon erwähnte Seilkonstruktion umfasst sein, aufweisend zumindest eines oder mehrere Zugseile, das bzw. die am Montageelement bzw. Montageblech befestigbar ist bzw. sind und die sich zur Ableitung der Gewichtskräfte der Leuchteneinrichtung bis zu einer Befestigungseinrichtung erstrecken, welche zur Befestigung an einer Zimmerdecke ausgebildet ist.

Um das Erscheinungsbild der als Pendelleuchte ausgebildeten erfindungsgemäßen Leuchteneinrichtung zu verbessern, kann vorgesehen sein, dass in einer Achsenrichtung zum Gehäuse außen zum Montageelement ein Leuchtendeckel beabstandet zum Montageelement angeordnet, insbesondere am Montageelement beabstandet befestigt ist zur Bereitstellung einer axialen Schattenfuge zwischen Gehäusestirnfläche und Leuchtendeckel, wobei das Montageblech etwa in axialer Höhe der Schattenfuge angeordnet sein kann. Die Angabe "beabstandete Befestigung des Leuchtendeckels am Montageelement zur Bereitstellung einer axialen Schattenfuge" kann dabei eine Gestaltung bezeichnen, bei welcher in einem Abschnitt, beispielsweise in einem Mittenabschnitt Leuchtendeckel und Montageelement aneinander befestigt sind, während radial außen die angegebene Beabstandung vorliegt, so dass ein Betrachter der Leuchte allein die besagte axiale Schattenfuge wahrnimmt. Dabei kann vorgesehen sein, dass diese Schattenfuge und damit auch die Beabstandung von Leuchtendeckel und Montageelement in Einbaulage über den vollständigen Umfang der Leuchteneinrichtung bereitgestellt ist zur Erzeugung des beschriebenen Erscheinungsbildes der Leuchteneinrichtung.

In einigen Ausführungsformen, insbesondere zur Gestaltung einer Deckenleuchte, kann zweckmäßigerweise auch vorgesehen sein, dass das Montageelement bzw. Montageblech axial eine zugeordnete Stirnfläche des Gehäuses in Einbaulage von Gehäuse und Montageelement zumindest abschnittsweise überragt, insbesondere zur Befestigung der Leuchteneinrichtung an einem Gebäudeabschnitt wie einer Zimmerdecke. In dieser Ausführungsform kann das Montageelement ausgebildet sein zur Befestigung an einer Zimmerdecke, beispielsweise durch das Vorsehen einer oder mehrerer Befestigungsdurchführungen, insbesondere zur jeweiligen Aufnahme einer Befestigungsschraube, über welche das Montageelement beispielsweise an einer Zimmerdecke befestigbar ist. Danach kann die erfindungsgemäße Leuchteneinrichtung als Deckenleuchte ausgebildet sein, wobei das Montageelement bzw. Montageblech zumindest eine axiale Durchführung zur Aufnahme eines in Einbaulage sich axial erstreckenden Befestigungselements zur Befestigung des Montageelements an einem Träger, insbesondere einer Decke eines Bauwerks aufweist. In dieser Ausführungsform kann das Gehäuse der Leuchteneinrichtung zunächst axial zum Montageblech ausgerichtet werden, derart, dass Offenpositionsabschnitte von Montageblech und Gehäuse radial gegenüberliegend angeordnet sind, nachfolgend das Gehäuse axial auf das ortsfest an der Decke gehaltene Montageelement bzw. Montageblech zubewegt wird bis zum Erreichen der axialen Schließposition zwischen Gehäuse und Montageblech. Nachfolgend kann das Gehäuse zum Montageelement bzw. Montageblech um eine Gehäuseachse gedreht werden zum Einstellen der Schließposition zwischen Gehäuse und Montageelement bzw. Montageblech, bei welcher zwischen diesen eine Drehverrastung sowie ein axialer Formschluss eingestellt ist.

Die Erfindung betrifft ferner ein System umfassend eine obenstehend beschriebene erfindungsgemäße Leuchteneinrichtung, bei welcher eine axiale Schattenfuge zwischen Gehäusestirnfläche und Leuchtendeckel ausgebildet ist, ferner umfassend ein flaches Werkzeugelement mit einem Griffabschnitt und einem Anlageabschnitt zum Eingriff in die Schattenfuge, wobei ein radial außenliegender Umfangsabschnitt des Montageelements und der diesem zugeordnete Anlageabschnitt des Werkzeuges in Anlage und Eingriff bringbar sind zum Aufbringen eines Drehmoments auf das Montageblech. Das erfindungsgemäße System erleichtert eine Wartung der beschriebenen erfindungsgemäßen Leuchteneinrichtung, da die Formschlussverbindungen zwischen Montageblech und Gehäuse leicht lösbar sind.

Dabei kann das Werkzeugelement in einer Ausführungsform sichelartig ausgebildet sein mit einem sich zu einem Sichelabschnitt des Werkzeugelements innenliegenden Anlageabschnitt und einem sich von einem freitragenden Endabschnitt des Sichelabschnittes des Werkzeugelements radial nach innen verlaufenden Vorsprung, wobei das Montageblech an seinem Umfang eine nach innen verlaufende Ausklinkung aufweisen kann zur Aufnahme des nach innen verlaufenden Vorsprungs des Werkzeugelements.

In einer weiteren Ausführungsform kann das Werkzeugelement gabelartig ausgebildet sein mit zwei zueinander beabstandeten, im Wesentlichen parallel verlaufenden Gabelzinken, die eine Gabelaufnahme mit einer Gabelweite festlegen, welche an den Abstand von zugeordneten Umfangsflächen des Montageelements angepasst sind zur abschnittsweisen Aufnahme des Montageelements in die Gabelaufnahme.

Die Erfindung wird im Folgenden unter Bezugnahme auf die beiliegenden Figuren durch das Beschreiben einiger Ausführungsformen erläutert, wobei
- Figur 1:: in einer Seitenansicht eine erfindungsgemäße, als Pendelleuchte ausgebildete Leuchteneinrichtung,
- Figur 2:: die in Figur 1 dargestellte erfindungsgemäße Leuchteneinrichtung in einer Aufsicht nach Entfernen eines Leuchtendeckels,
- Figur 3:: eine perspektivische Ansicht der Leuchteneinrichtung der Figur 1 mit entferntem Gehäuse,
- Figur 4:: eine Seitenansicht einer zweiten Ausführungsform einer erfindungsgemäß gestalteten Leuchteneinrichtung mit transparent dargestelltem Gehäuse,
- Figur 5:: die erfindungsgemäße Leuchteneinrichtung der Figur 4 mit entferntem Leuchtendeckel in einer Aufsicht,
- Figur 6:: das Gehäuse der Leuchteneinrichtung der Figur 4 in einer perspektivischen Stirnseitenansicht,
- Figur 7:: einen Leuchtenkopf der erfindungsgemäßen Leuchteneinrichtungen der Figuren 1 und 4,
- Figur 8:: eine perspektivische Ansicht auf ein Montageelement der Leuchteneinrichtung der Figur 4 mit daran angepasstem Werkzeug,
- Figur 9a): die Anbringung einer als Deckenleuchte ausgebildeten erfindungsgemäßen Leuchteneinrichtung in einer Prinzipdarstellung, und
- Figur 9b): in einer Detailansicht die Anbringung des Montageelements der Deckenleuchte der Figur 9a) an einen Träger, wie eine Zimmerdecke zeigt.

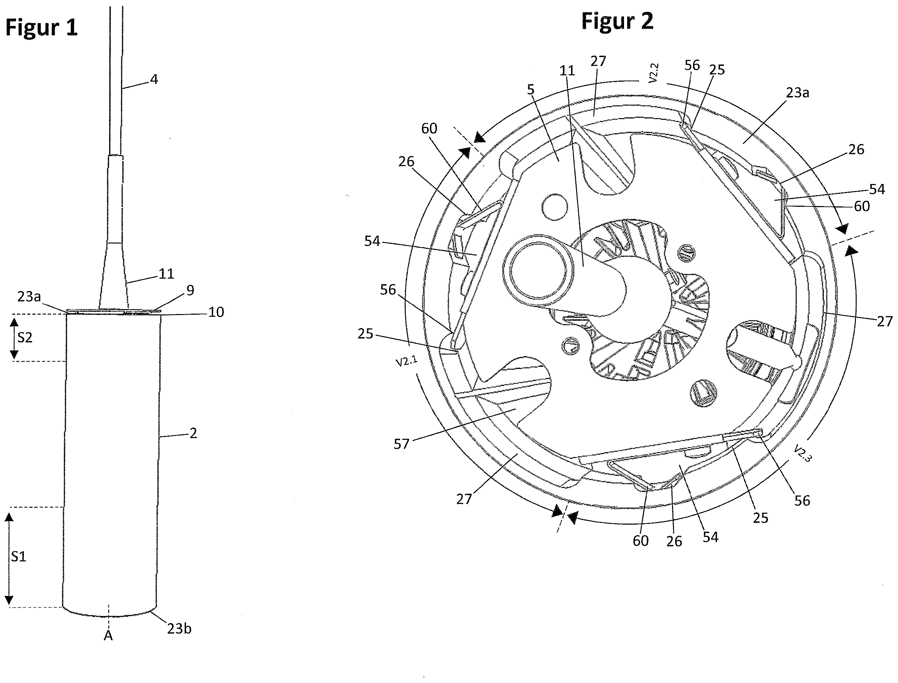

In Figur 1 ist eine erfindungsgemäß, als Pendelleuchte ausgebildete Leuchteneinrichtung 1 in einer Seitenansicht angegeben, die in dieser Ausführungsform ein langgestrecktes, rohrförmiges Gehäuse 2 aufweist, das beispielsweise ein Metallgehäuse wie ein Aluminiumgehäuse sein kann. Das Gehäuse 2 kann wie in Figur 1 angegeben, mit einer zylinderförmigen Außenkontur gestaltet sein. Erfindungsgemäß kann das rohrartige Gehäuse 2 jedoch auch eine andere Außenkontur, beispielsweise eine rechteck- oder ovalförmigen Querschnitt senkrecht zur Längserstreckungsrichtung A aufweisen. Das hier hohlzylinderförmige Gehäuse 2 nimmt in einem ersten Stirnseitenabschnitt S1 einen durch das Gehäuse 2 in Figur 1 verdeckten Leuchtenkopf auf, welcher eine Leuchtmittelanordnung, insbesondere umfassend Leuchtmittel wie LED-Leuchtmittel zur Abgabe von Licht sowie eine zur Leuchtmittelanordnung in Lichtrichtung nachgeschaltete Optikeinrichtung, wie beispielsweise eine Kollimatoroptik und einen diesem optisch nachgeschaltete optische Abdeckung auf. Die Leuchteneinrichtung 1 der Figur 1 gibt insofern Licht an seiner in Figur 1 unteren Stirnfläche im Wesentlichen nach unten ab und kann beispielsweise zur Beleuchtung einer Tisch- oder Bodenfläche eingesetzt werden, indem diese oberhalb der zur beleuchtenden Fläche, beispielsweise an der Zimmerdecke befestigt ist.

Demgegenüber ist an den gegenüberliegenden Stirnseitenabschnitt S2 des Gehäuses 2 ein Leuchtenversorgungszugang zur Durchführung eines elektrischen Versorgungskabels 4 vorgesehen, der selbst ein in Figur 1 nicht sichtbares Montageelement 5 aufweist, das ein Montageblech 50 umfasst bzw. in seiner einfachsten Ausführungsform als Montageblech ausgebildet sein kann. Das Montageelement 5 umfasst umfangsseitig eine Verbindungseinrichtung, die mit einer zugeordneten Verbindungseinrichtung des Gehäuses 2 zum mechanischen Koppeln von Gehäuse 2 und Montageelement 5 zusammenwirkt, auf deren Gestaltungen nachfolgend eingegangen wird. In der beschriebenen Ausführungsform ist der Stirnseitenabschnitt S2 mittels eines Leuchtendeckels 9 in Achsenrichtung A abgedeckt, wobei die Abdeckung 9 beabstandet zur Stirnfläche 23a des Gehäuses 2 angeordnet ist zur Bereitstellung einer Schatten- bzw. Lüftungsfuge 10, welche insbesondere zur Abführung von durch die Abwärme der Leuchtmittelanordnung erwärmten Luft aus dem Inneren des Gehäuses 2 gestaltet ist. Zur Bereitstellung eines Kamineffektes für die Unterstützung der Abführung der Abwärme über die Lüftungs- bzw. Schattenfuge 10 kann die Leuchteneinrichtung 1 im Bereich der gegenüberliegenden Stirnfläche 23b des Gehäuses 2 Öffnungen zum Eintritt von Luft in das Innere des Gehäuses 2 aufweisen.

Figur 2 zeigt eine Ansicht auf den Leuchtenversorgungszugang mit entferntem Leuchtendeckel 9, so dass die Ansicht auf das Montageelement 5 bzw. Montageblechs sowie dessen Verbindungseinrichtung V1 und die zugeordnete Verbindungseinrichtung V2 des Gehäuses 2, welche zum mechanischen Koppeln von Gehäuse 2und Montageelement 5 in einer Schließposition zusammenwirken, freigelegt ist. In der beschriebenen Ausführungsform ist die Verbindungseinrichtung V2 des Gehäuses 2 ausgehend von der Stirnfläche 23a zumindest abschnittsweise durch innenseitige Verdünnungen bzw. Ausnehmungen an einem Gehäusewandabschnitt des Gehäuses 2 ausgebildet, die sich axial über ein vorgegebenes Längsmaß des Gehäuses 2 erstrecken. In der beschriebenen Ausführungsform weist das Gehäuse 2 drei derartige Verbindungseinrichtungen V2.1 bis V2.3 auf, die sich jeweils umfänglich über einen vorgegebenen Winkelabschnitt erstrecken und umfänglich aufeinanderfolgen. Erkennbar weist jede der Verbindungseinrichtungen V2.1 bis V2.3 umfänglich sich über ein unterschiedliches Maß erstreckende Ausnehmungen 26, 27 auf, die durch einen Abschnitt mit nicht verminderter Wandstärke des Gehäuses 2 getrennt sind. Dabei fungiert die Ausnehmung 26 in noch zu beschreibender Art als Rastausnehmung für ein am Montageelement 5 angeordnetes Rastelement und die Ausnehmung 27 als Fügeausnehmung, die angeordnet und ausgebildet ist, das Montageelement 5 und das Gehäuse 2 axial zueinander auszurichten, bevor diese durch eine relative Drehung zueinander in eine Schließposition bringbar sind, bei welcher sich das Montageblech 50 und das Gehäuse 2 in einem Formschluss in axialer Richtung und einer Drehverrastung zueinander befinden. Figur 2 zeigt die relative Anordnung von Montageblech 50 und Gehäuse 2 in der Schließposition, bei welcher ein Abschnitt eines Formschlusselementes des Montageelements 5 in eine radiale Schlitzaufnahme 25 der jeweiligen Verbindungseinrichtung V2 des Gehäuses 2 eintaucht.

Wie für den Fachmann ersichtlich, weist das Montageelement 5 in der beschriebenen Ausführungsform zu den Verbindungseinrichtungen V2.1 bis V2.3 des Gehäuse entsprechende bzw. zugeordnete Verbindungseinrichtungen auf, die sich über jeweils entsprechende Umfangsabschnitte erstrecken zur beschriebenen Kopplung von Montageelement 5 und Gehäuse 2 zur Vorbereitung und Einstellung der angegebenen Schließposition, bei welcher ein erstes Formschlusselement des Gehäuses 2 mit einem ersten Formschlusselement des Montageelements 5 zur Bereitstellung eines Formschlusses in axialer Richtung und ein zweites Formschlusselement des Gehäuses 2 mit einem zweiten Formschlusselement des Montageelements 5 zusammenwirkt zur Bereitstellung der angegebenen Drehverrastung zwischen Montageelement 5 und Gehäuse 2.

In Bezug auf die Verbindungseinrichtung V2 des Gehäuses 2 entspricht dem ersten Formschlusselement die angegebene Schlitzaufnahme 25 und das zweite Formschlusselement des Gehäuses 2 die beschriebene Rastausnehmung 26. Dagegen weist das Montageelement 5 in der beschriebenen Ausführungsform als erstes, mit dem ersten Formschlusselement der Verbindungseinrichtung V2 des Gehäuses zusammenwirkendes Formschlusselement einen in die Schlitzaufnahme 25 des Gehäuses 2 eintauchenden Radialflansch 54 auf, während das zweite Formschlusselement des Montageelements 5 ein als Rastelement ausgebildetes und angeordnetes Federelement 60 aufweist bzw. als solches ausgebildet sein kann.

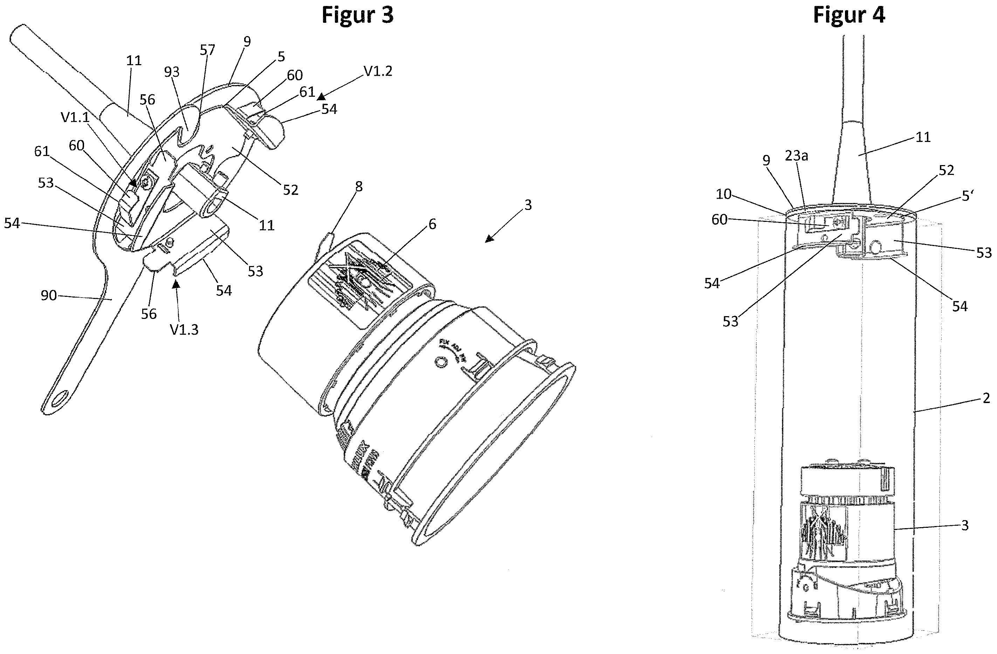

Figur 3 zeigt die Darstellung der Figur 1 der erfindungsgemäßen Leuchte mit entferntem Leuchtendeckel 9 in einer Seitenansicht, wobei zur Erläuterung der Verbindungseinrichtung V1 des Montageelements bzw. des Montageblechs 50 das Gehäuse 2 entfernt ist und zur Erläuterung des Einstellens und des Lösens der Schließposition zwischen Montageelement 5 und Gehäuse 2 ein in die Schattenfuge 10 (siehe Figur 1) eingreifbares Werkzeug 90 gezeigt ist. Das Montagelement 5 ist in der beschriebenen Ausführungsform als Montageblech ausgebildet mit einem Schließabschnitt 52, der eine Schließebene senkrecht zur Gehäuseachse A festlegt. Die Verbindungseinrichtungen V1 des Montagelements 5 bzw. des Montageblechs 50, die entsprechend der umfänglichen Anordnung der Verbindungseinrichtungen V2.1 bis V2.3 des Gehäuses 2 umfänglich aufeinanderfolgend am Montageelement 5 angeordnet sind, weisen in der beschriebenen Ausführungsform in jedem der Verbindungseinrichtungen V1 einen zum Schließabschnitt 52 axial und radial abgesetzten, insbesondere zum Schließabschnitt 52 parallel verlaufenden Radialflanschabschnitt 54 auf, der bei einer relativen Drehbewegung von Gehäuse 2 und Montageelement 5 in die Schließposition in eine zugeordnete Schlitzaufnahme 25 der Verbindungseinrichtung V2 des Gehäuses 2 eintaucht, siehe Figur 2, wodurch ein axialer Formschluss zwischen Montageelement 5 und Gehäuse 2 bereitgestellt ist. Dabei ist der Schließabschnitt 52 des Montageelements 5 mit dem zumindest einen Radialflanschabschnitt 54 mittels eines axial verlaufenden Verbindungsabschnittes 53 verbunden, wobei das zumindest eine Federelement 60 an dem Verbindungsabschnitt angeordnet, insbesondere befestigt ist.

Es kann vorgesehen sein, dass das Montagelement 5 mit Ausnahme des Federelements 60 und dessen Befestigung am Montageelement 5 aus einem einzelnen Blechteil durch entsprechende Umformung gestaltet ist. Der Verbindungsabschnitt 53 kann eine tangentiale Verlängerung 56 aufweisen, die als Anschlagssteg ausgebildet ist, der mit einem entsprechenden Abschnitt am Gehäuse 2 zusammenwirkt zur Beschränkung einer relativen Drehbewegung von Montageelement 5 und Gehäuse 2 zueinander zur Festlegung der Schließposition, siehe Figur 2. Dieser Anschlagssteg kann auch als separates Teil am Verbindungsabschnitt befestigt sein. Die in Figur 2 angegebene Anschlagssituation des Vorsprungs bzw. Anschlagssteges 56 korrespondiert mit der Schließposition, bei welcher das Federelement 60 in der Rastausnehmung 26 an der Innenwandung des Gehäuses 2 einrastet, siehe Figur 2.

Das Federelement 60 kann in einem Längsschnitt eine offene, dreieckige Grundform aufweisen mit einem ebenen Befestigungsabschnitt, mit welchem das Federelement 60 flächig an dem Verbindungsabschnitt 53 des Montageelements 5 anliegt und mit diesem verbunden, beispielsweise mittels einer Schraube, verbunden ist und einem sich daran anschließenden freitragenden Federarm umfassend zwei, insbesondere ebene Führungsabschnitte, die einen Winkel von etwa 90° aufweisen und in ihrem Verbindungsbereich einen Anlageabschnitt 61 festlegen, der bei einer relativen Verdrehung von Montageelement 5 und Gehäuse 2 zueinander an der strukturierten Innenwandung des Gehäuses 2 anliegt.

Aus Figur 3 ersichtlich ist ferner die Erstreckung der Kabeltülle 11 in den axialen Bereich der Verbindungseinrichtungen V1, V2 und in einen bezüglich der radialen Anordnung Mittenbereich, durch welche sich das nicht dargestellte Versorgungskabel erstreckt, das über die dargestellten Klemmschrauben in der Kabeltülle 11 verklemmt ist, wobei die Kabeltülle 11 in nicht dargestellter Weise am Montageblech 50 befestigt ist. In der dargestellten Ausführungsform ist das Versorgungskabel zur elektrischen Versorgung der Leuchteneinrichtung 1 auch als Zugmittel ausgebildet, über das die Leuchteneinrichtung 1 an einem Träger, beispielsweise einer Zimmerdecke, befestigbar ist.

Wie schon angegeben, ist in der Darstellung der Figur 3 ein Werkzeugelement 90 in die Schattenfuge 10 (siehe Figur 1) zwischen der Stirnfläche 23a und dem Leuchtendeckel 9 eingeführt und greift mit einem nach innen verlaufenden Vorsprung 93 eine der radialen Ausklinkungen 57 des Montageelementes 5 ein, so dass ein entsprechendes Drehmoment aufbringbar ist, um beispielsweise ausgehend von der beschriebenen relativen Schließposition zwischen Montageelement 5 und Gehäuse 2 die genannten beiden Bauteile relativ zueinander zu drehen zur Aufhebung des beschriebenen axialen Formschlusses und der beschriebenen Drehverrastung zwischen Montageelement 5 und Gehäuse 2.

In der beschriebenen Ausführungsform weist die erfindungsgemäße Leuchteneinrichtung 1 an ihrem dem Leuchtenversorgungszugang abgewandten Stirnseitenabschnitt S2 einen Leuchtkopf 3 auf, der vollständig im nicht dargestellten Gehäuse 2 aufgenommen und mit diesem verrastet ist. An der Außenfläche des Leuchtenkopfs 3, welcher hier eine Leuchtmittelanordnung, eine zur Leuchtmittelanordnung in Lichtrichtung nachgeschaltete Optikeinrichtung, wie zum Beispiel eine optische Abdeckung sowie eine an die Leuchtmittelanordnung angekoppelte Kühlkörpereinrichtung 6 aufweist, sind entsprechende Rastelemente angeordnet, welche mit zugeordneten, an der Innenfläche ausgebildeten oder angeordneten Rastelementen zusammenwirken zum Halten des Leuchtenkopfs 3 im Gehäuse 2.

Figur 4 zeigt eine weitere Ausführungsform einer erfindungsgemäß ausgebildeten Leuchteneinrichtung 1 in einer ähnlichen Darstellung wie die der Figur 3, wobei das Gehäuse 2 hier transparent dargestellt ist, so dass der Blick auf das Montageelement 5' freigegeben ist, das in dieser Ausführungsform allein zwei Verbindungseinrichtungen V1,1, V1.2 aufweist, die im Wesentlichen identisch zu den Verbindungseinrichtungen V1.1 bis V1.3 der Ausführungsform der Figur 3 ausgebildet sind. Das Montageblech umfasst insofern einen Schließabschnitt 52 und die beiden umfänglich aufeinanderfolgenden Verbindungseinrichtungen, die jeweils einen zum Schließabschnitt 52 axial und radial abgesetzten, insbesondere zum Schließabschnitt 52 parallel verlaufenden Radialflanschabschnitt 54 aufweisen, der bei einer relativen Drehbewegung von Gehäuse 2 und Montageelement 5' zueinander in die Schließposition eingerichtet und ausgebildet ist zum Eintauchen in eine zugeordnete Schlitzaufnahme 25 der Verbindungseinrichtung V2 des Gehäuses 2. Darüber hinaus weisen die Verbindungseinrichtungen V1.1, V1.2 einen axial verlaufenden Verbindungsabschnitt 53 auf, der den jeweiligen Schließabschnitt 52 des Montageblechs 50 mit dem zumindest einen Radialflanschabschnitt 54 verbindet, wobei wiederum das zumindest eine Federelement 60 an dem Verbindungsabschnitt 53 befestigt ist. Dabei kann vorgesehen sein, dass das Federelement 60, unabhängig von der Anzahl der Verbindungsabschnitte V1 am Montageelement 5' sich radial bis etwa zur radialen Erstreckung des Radialflanschabschnittes 54 erstreckt.

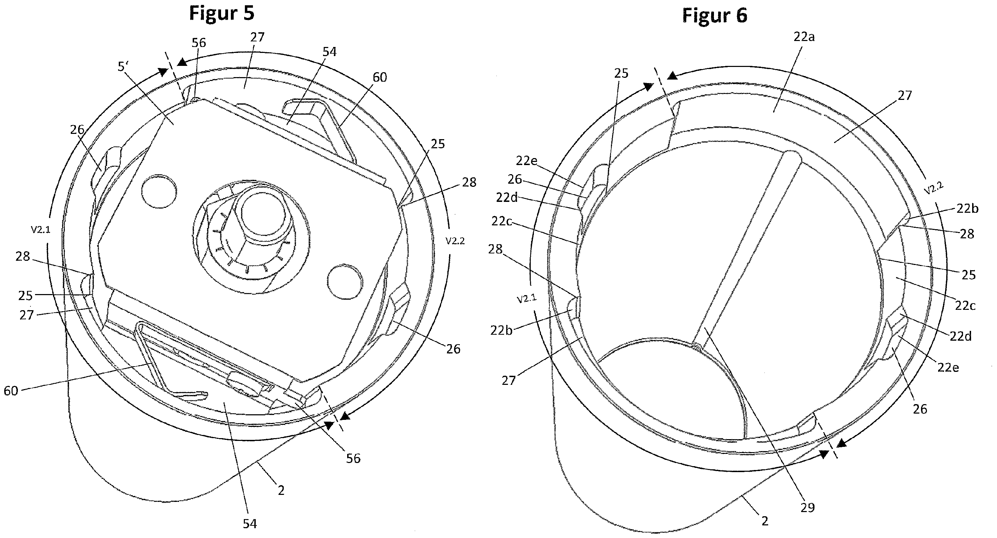

Figur 5 zeigt die Ausführungsform der Figur 4 in einer Darstellung entsprechend der Figur 2 für die erste Ausführungsform einer erfindungsgemäß ausgebildeten Leuchteneinrichtung 1. Neben dem Unterschied, dass das Montageelement 5' in dieser Ausführungsform allein zwei Verbindungseinrichtungen V2.1, V2.2 aufweist, die umfänglich an der Innenseite des Gehäuses 2 an dem Stirnseitenabschnitt S2, siehe Figur 1, angeordnet sind, unterscheidet sich die Darstellung der Figur 5 von der der Figur 4 dadurch, dass eine relative Lage von Gehäuse 2 und Montageelement bzw. Montageblech 50 gezeigt ist, bei welcher eine Offenstellung eingestellt ist, die sich dadurch auszeichnet, dass die Federeinrichtungen im Bereich der zugeordneten Fügeausnehmung 27 angeordnet sind und insofern nicht in die Rastausnehmung 26 eingerastet ist. Ferner ist in dieser relativen Lage von Montageelement und Gehäuse der jeweilige Radialflanschabschnitt 54 nicht in eine zugeordnete Schlitzaufnahme 25 radial eingetaucht, so dass in der in Figur 5 angegebenen relativen Anordnung von Gehäuse 2 und Montageelement 5 zueinander beide in axialer Richtung bewegbar, insbesondere zur Demontage bzw. Montage angeordnet sind. Zur Klarheit der Darstellung zeigt Figur 6 die Darstellung der Figur 5 allein das Gehäuse 2, so dass die jeweiligen Verbindungseinrichtungen V2.1, V2.2 vollständig sichtbar sind.

Wie sich aus den bisherigen Erläuterungen zu den Verbindungseinrichtungen V2 des Gehäuses 2 mit den Verbindungseinrichtungen V1 des Montageelements 5 ergibt, sind erste und zweite Formschlusselemente der Verbindungseinrichtung V2 in gleicher Weise wie die Formschlusselemente der Verbindungseinrichtung V1 axial übereinander angeordnet. In der Darstellung der Figur 6 ist die Schlitzaufnahme 25 axial unterhalb der Rastausnehmung 26 ausgebildet bzw. letztere grenzt an erstere an.

Wie der Fachmann erkennt, umfasst die Verbindungseinrichtung V2 des Gehäuses eine Mehrzahl von aufeinanderfolgenden, umfänglich sich erstreckende Steuerflächen für das elastische Federelement 60 des Montageelementes 5 durch dessen Gestaltung eine vorgegebene Haptik bei der Einstellung bzw. dem Lösen der Schließposition zwischen Gehäuse 2 und Montageelement 5 erzeugbar ist. Diese Steuerfläche 22 setzt sich in der beschriebenen Ausführungsform aus einer Mehrzahl von umfänglich aufeinanderfolgenden Steuerflächenabschnitten 22a bis 22e zusammen. In der beschriebenen Ausführungsform ist die Steuerfläche 22a, d. h. die Steuerfläche im Bereich der Fügeausnehmung 27, mit im Wesentlichen konstantem radialen Abstand zur Achse des Gehäuses (im Wesentlichen konstanter Radialhöhe) ausgebildet. Sobald bei einer relativen Verdrehung von Montageelement 5 und Gehäuse 2 zur Einstellung der Schließposition der Anlagebereich 61 des Federelements 60 zur Anlage an den Steuerflächenabschnitt des ersten Übergangsbereichs 22b gelangt, welche im Vergleich zur Steuerfläche des Fügeausnehmungsbereichs 22a eine geringere radiale Höhe aufweist, erfolgt eine elastische Auslenkung des Anlagebereichs 61 des Federelements 60 radial nach innen, so dass die Feder gespannt wird und insofern Energie aufgebracht werden muss, was ein Nutzer in Folge der geänderten Haptik erkennt. Nach Erreichen der radialen Höhe der Übergangssteuerfläche 22c,deren radiale Höhe in der beschriebenen Ausführungsform im Wesentlichen konstant ist, kann eine weitere gegenseitige Verdrehung von Montageelement 5 und Gehäuse 2 durchgeführt werden, ohne dass ein erhöhter Energieeintrag zur relativen Verdrehung von Montageelement 5 und Gehäuse 2 zueinander erfolgen muss, da in der beschriebenen Ausführungsform in diesem Mittenbereich sich die radialer Höhe der Steuerfläche 22c nicht ändert. Nachdem der Anlagebereich 61 des Federelements 60 die Steuerfläche des Mittenbereichs 22c verlässt und in die Steuerfläche des zweiten Übergangsbereichs 22d eintritt, entspannt sich das Federelement 60, wodurch die Reibung zwischen Federelement 60 und Steuerfläche vermindert ist, was dem Betätiger durch eine geänderte Haptik angezeigt wird. Nach der Anordnung des Federelements 60 in der zugeordneten Rastausnehmung 26 ist die Drehverrastung zwischen den beiden zweiten Formschlusselementen erreicht. Eine Weiterdrehung von Montageelement 5 und Gehäuse 2 zueinander wird in der beschriebenen Ausführungsform durch den Anschlag des Steges 56 des Montageelements 5 an einen zugeordneten Anschlag 28 im ersten Übergangsbereich der Steuerfläche verhindert, siehe Figur 5.

Beim Lösen der Schließposition werden Montageelement 5 und Gehäuse 2 relativ zueinander in entgegengesetzter Richtung verdreht, so dass der Anlagebereich 61 des Federelements 60 zunächst an der als Rampe ausgebildeten Steuerfläche des zweiten Übergangsbereichs 22d anliegt, wodurch der Anlagebereich 61 radial nach innen bewegt und insofern elastisch Energie im Federelement 60 gespeichert wird, was dem Benutzer haptisch durch einen erhöhten Energieaufwand zur Aufrechterhaltung der relativen Drehung von Montageelement 5 und Gehäuse 2 zueinander angezeigt wird.

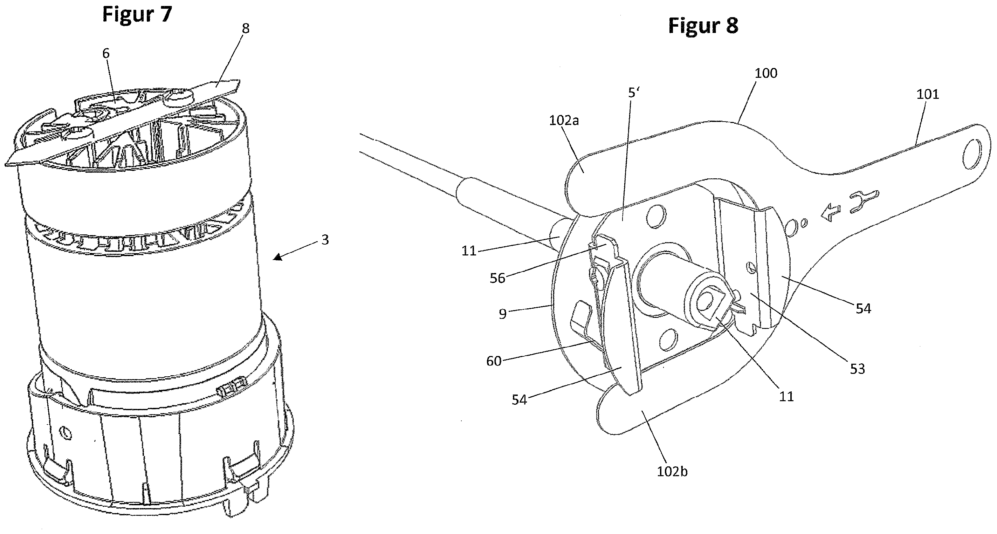

Wie aus Figur 6 mit Bezug auf Fig. 7 ferner ersichtlich, weist in der beschriebenen Ausführungsform das Gehäuse eine sich ausgehend von der Verbindungseinrichtung V2 bis zur gegenüberliegenden Stirnseite erstreckende Längsausnehmung 29 auf, welche zur Aufnahme eines Kratzkontaktelements 8 ausgebildet ist, das sich quer zum Leuchtenkopf 3 erstreckt, am Kühlkörper 6 des Leuchtenkopfs 3 befestigt ist und sich radial jeweils über den Leuchtenkopf 3 hinaus erstreckt. Dabei kann vorgesehen sein, dass das Kratzkontaktelement 8 in Einbaulage zum Gehäuse einen elektrischen Kontakt zwischen Kühlkörper und Gehäuse 2 bereitstellt, so dass es zur Gestaltung eines Schutzkontaktes je nach Ausführungsform ausreicht, entweder die Kühlkörpereinrichtung oder das Gehäuse 2 mit einem Schutzkontakt zu versehen.

Während Figur 3 ein System umfassend ein Werkzeugelement mit der erfindungsgemäß ausgebildeten Leuchteneinrichtung zum Einstellen bzw. zum Öffnen der Schließposition von Montageelement 5 und Gehäuse 2 zeigt, bei welchem das Werkzeugelement sichelartig ausgebildet ist mit einem sich zu einem Sichelabschnitt des Werkzeugelements innenliegenden Anlageabschnitt und einem sich von einem freitragenden Endabschnitt des Sichelabschnitts radial nach innen verlaufenden Vorsprung, wobei das Montageblech 50 an seinem Umfang eine nach innen verlaufende Ausklinkung 57 aufweist zur Aufnahme des nach innen verlaufenden Vorsprungs 93 des Werkzeugelements, zeigt Figur 8 ein Werkzeugelement 100, das wiederum zur Einführung in ein erfindungsgemäß ausgebildetes Leuchteneinrichtung 1 gestaltet ist, bei welchem das Montageelement 5' im Bereich des Schließabschnittes parallel und geradlinig zueinander verlaufende Umfangsseitenflächen aufweist. Dabei ist das Werkzeugelement 100 dieses Systems gabelartig ausgebildet mit zwei zueinander beabstandeten, im Wesentlichen parallel verlaufenden Gabelzinken 102a, b, die eine Gabelaufnahme mit einer Gabelweite festlegen, welche an den Abstand von zugeordneten Umfangsflächen des Montageelements 5' angepasst sind zur abschnittsweisen Aufnahme des Montagelements 5' in die Gabelaufnahme.

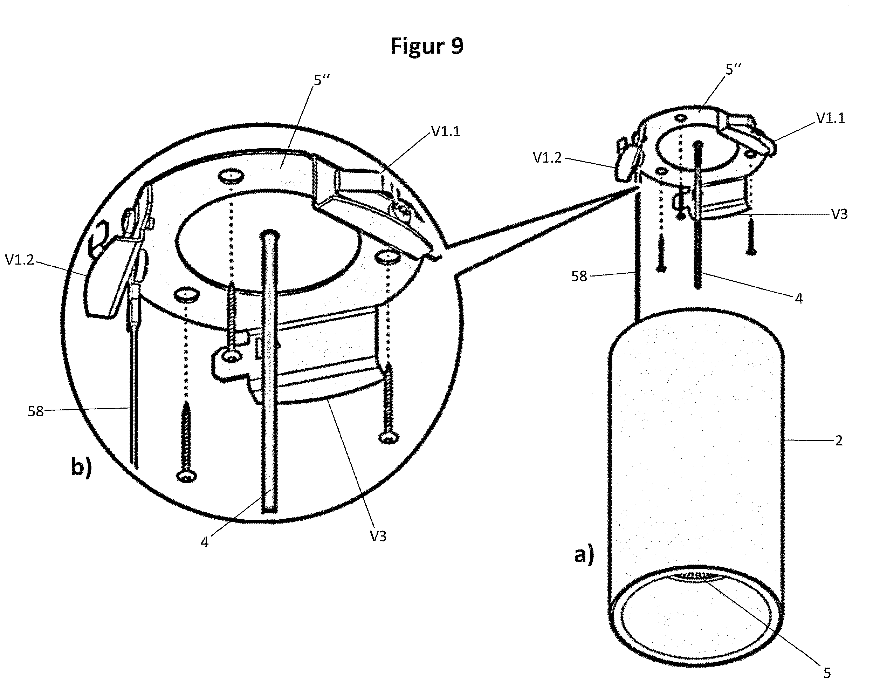

In den bislang beschriebenen erfindungsgemäß ausgebildeten Leuchteneinrichtungen 1 sind diese als Pendelleuchten ausgebildet, die entweder über ein Zugseil oder direkt über das Versorgungskabel an einen Träger, beispielsweise eine Zimmerdecke befestigbar sind. Die erfindungsgemäße Leuchteneinrichtung 1 ist jedoch auch als Deckenleuchte ausbildbar, bei welcher das Montageelement 5" direkt an einem Träger, wie einer Zimmerdecke befestigbar, beispielsweise anschraubbar ist, siehe Figur 9a. Das dargestellte Montageelement 5" ist hier ringförmig ausgebildet und weist umfangsseitig zumindest zwei, in dieser Ausführungsform drei umfänglich beabstandete Verbindungseinrichtungen V1 auf, welche identisch mit den Verbindungseinrichtungen V1 der obenstehend beschriebenen erfindungsgemäßen Leuchteneinrichtungen 1 ausgebildet sein können. Nach der Montage des Montageelements 5" an den Träger, kann zur Erleichterung der Montage ein am Montageelement 5" befestigtes Halteseil am Gehäuse 2 angebracht werden, in welchem im Vorfeld der Leuchtenkopf 3 eingesetzt ist. Figur 9b zeigt den Aufbau und die Befestigung des Montageelements 5" in einer vergrößerten Darstellung.

Zur Befestigung des den Leuchtenkopf 3 tragenden Gehäuses 2 an dem Montageelement 5" werden diese koaxial zueinander ausgerichtet und umfänglich so orientiert, dass die Federelemente 60 des Montageelements 5" im Bereich der Fügeausnehmung 27 des Gehäuses 2 liegen, so dass das Gehäuse 2 axial so weit auf das Montageelement 5 aufsetzbar ist, dass die Radialflansche 54 auf axialer Höhe zu den Schlitzaufnahmen 25 der Verbindungseinrichtung V2 des Gehäuses 2 liegen. Danach kann durch eine reine Verdrehung des Gehäuses 2 zum feststehenden Montageelement 5 beide Teile von ihrer Offenposition in die Schließposition überführbar sind, bei welcher der beschrieben axiale Formschluss zwischen Radialflansch 54 und zugeordneter Schlitzaufnahme 25 eingestellt und ferner das rastende Federelement 60 in seiner zugeordneten Rastausnehmung 26 zum Liegen kommt.

### Bezugszeichenliste

- 1: Leuchteneinrichtung
- 2: Gehäuse
- 3: Leuchtenkopf
- 4: Versorgungskabel
- 5, 5', 5": Montageelement
- 6: Kühlkörpereinrichtung
- 8: Kratzkontaktelement
- 9: Leuchtendeckel
- 10: Schattenfuge/Lüftungsfuge
- 11: Kabeltülle
- 20: Innenfläche
- 22a: Steuerfläche des Fügeausnehmungsbereichs
- 22b: Steuerfläche des ersten Übergangsbereichs
- 22c: Steuerfläche des Mittenbereichs
- 22d: Steuerfläche des zweiten Übergangsbereichs
- 22e: Steuerfläche des Rastausnehmungsbereichs
- 23a, b: Stirnfläche
- 25: Schlitzaufnahme
- 26: Rastausnehmung
- 27: Fügeausnehmung
- 28: Gegenanschlag
- 29: Längsausnehmung
- 50: Montageblech
- 52: Schließabschnitt
- 53: Verbindungsabschnitt
- 54: Radialflansch
- 56: Anschlagssteg
- 57: Ausklinkung
- 58: Halteseil
- 60: Federelement
- 61: Anlagebereich
- 90: Werkzeugelement
- 91: Griffabschnitt
- 92: Sichelabschnitt
- 92a: Anlageabschnitt
- 93: Vorsprung
- 100: Werkzeugelement
- 101: Griffabschnitt
- 102a, b: Gabelzinken
- V1: Verbindungseinrichtung des Montageelements
- V2: Verbindungseinrichtung des Gehäuses
- S1: Stirnseitenabschnitt
- S2: Stirnseitenabschnitt
- A: Achse

## Patentansprüche

1. Leuchteneinrichtung (1), insbesondere Pendel- oder Deckenleuchte, umfassend ein rohrartiges Gehäuse (2) mit zueinander gegenüberliegend angeordneten Stirnseitenabschnitten (S1, S2), wobei an einem der Stirnseitenabschnitten (S1) eine Leuchtmittelanordnung umfassend zumindest ein Leuchtmittel zur Abgabe von Licht, insbesondere ein LED-Leuchtmittel, sowie zumindest eine zur Leuchtmittelanordnung in Lichtrichtung nachgeschaltete Optikeinrichtung (z. B. optische Abdeckung) angeordnet ist, wobei an dem anderen Stirnseitenabschnitt (S2) des Gehäuses (2) ein Leuchtenversorgungszugang zur Durchführung eines elektrischen Versorgungskabels (4) in das Gehäuse (2) umfasst ist, und der Leuchtenversorgungszugang ein stirnseitig angeordnetes Montageelement (5) aufweist, das eine Öffnung zur Durchführung des Versorgungskabels (4) umfasst, und das Montageelement (5) ein Montageblech (50) aufweist, das umfangsseitig eine Verbindungseinrichtung (V1) umfasst, die mit einer zugeordneten Verbindungseinrichtung (V2) des Gehäuses (2) zum mechanischen Koppeln von Gehäuse (2) und Montageelement (5) zusammenwirkt, **dadurch gekennzeichnet, dass** die Verbindungseinrichtung (V1) des Montageblechs (50) mit der Verbindungseinrichtung (V2) des Gehäuses (2) in einer Schließposition gewindefrei zum mechanischen Koppeln von Gehäuse (2) und Montageelement (5) zusammenwirken, wobei die Verbindungseinrichtung (V2) des Gehäuses (2) sowie die Verbindungseinrichtung (V1) des Montageblechs (50) ausgehend von einer Offenposition durch eine relative Drehung von Gehäuse (2)und Montageblech (50) zueinander um eine Achse (A) des Gehäuses (2) in die Schließposition bringbar sind, bei welcher sich das Montageblech (50) und das Gehäuse (2) in einem Formschluss in axialer Richtung und in einer Drehverrastung zueinander befinden.

2. Leuchteneinrichtung (1) nach Anspruch 1, **dadurch gekennzeichnet, dass** die beiden Verbindungseinrichtungen (V1, V2) in der Schließposition von Montageelement (5) und Gehäuse (2) einander zugeordnete erste Formschlusselemente (25, 54) zur Bereitstellung des Formschlusses in axialer Richtung zwischen Montageelement (5) und Gehäuse (2) sowie einander zugeordnete zweite Formschlusselemente (26, 60) zur Bereitstellung der Drehverrastung zwischen Montageelement (5) und Gehäuse (2) aufweisen, wobei erste und zweite Formschlusselemente am Montageelement (5) und am Gehäuse (2) jeweils in Axialrichtung übereinander und innerhalb eines gemeinsamen Umfangsabschnittes angeordnet sind.

3. Leuchteneinrichtung (1) nach Anspruch 1 oder 2, **dadurch gekennzeichnet, dass** eine der Verbindungseinrichtungen (V1) zumindest ein radial auslenkbares Federelement (60)mit einem radial vorragenden Anlagebereich (61) aufweist, das an einer umfänglich erstreckenden Steuerfläche (22) der anderen Verbindungseinrichtungen (V2) abgestützt ist, wobei die Steuerfläche (Lauffläche, 22) zumindest abschnittsweise in ihrer Radialhöhe variiert zur Bereitstellung einer vorgegebenen Haptik und/oder Anzeige des Erreichens der Drehverrastung in der Schließposition zwischen Gehäuse (2) und Montageelement (5).

4. Leuchteneinrichtung (1) nach Anspruch 1, 2 oder 3,
**dadurch gekennzeichnet, dass** die an dem anderen Stirnseitenabschnitt (S2) des Gehäuses (2) angeordnete Verbindungseinrichtung (V2) des Gehäuses (2) zumindest teilweise, insbesondere vollständig, durch innenseitige Verdünnungen bzw. Ausnehmungen an einem Gehäusewandabschnitt des Gehäuses (2) ausgebildet ist.

5. Leuchteneinrichtung (1) nach Anspruch 3 und 4,
**dadurch gekennzeichnet, dass** die Verbindungseinrichtung (V2) des Gehäuses (2) die sich umfänglich erstreckende Steuerfläche (22a-e) aufweist, wobei die Steuerfläche (22a-e) zumindest einen Offenpositionsflächenabschnitt (mit einer ersten radialen mittleren Höhe) festlegt, einen Mittenflächenabschnitt (mit einer zweiten radialen Höhe) sowie einen Schließpositionsflächenabschnitt als Teilfläche einer Rastausnehmung (26) (mit einer dritten radialen Höhe) festlegt, wobei zwischen Mittenflächenabschnitt und Schließpositionsflächenabschnitt ein Übergangsflächenabschnitt vorgesehen ist, der ausgebildet und eingerichtet ist, bei einer relativen Verdrehung von Gehäuse (2) und Montageblech (50) ausgehend von der gegenseitigen Offenposition in die Schließposition eine elastische, druckbeaufschlagte Anlage des Federelements (60) gegen den Übergangsflächenabschnitt durch elastische Entspannung in ein Drehmoment zur Unterstützung der relativen Verdrehung von Gehäuse (2) und Montageblech (50) zu wandeln.

6. Leuchteneinrichtung (1) nach einem der Ansprüche 1 bis 5, **dadurch gekennzeichnet, dass** das Montageblech (50) einen Schließabschnitt (52) zur Festlegung einer Schließebene senkrecht zur Gehäuseachse (A) aufweist und die Verbindungseinrichtung (V1) des Montageblechs (50) zumindest einen zum Schließabschnitt (52) axial und radial abgesetzten, insbesondere zum Schließabschnitt (52) parallel verlaufenden Radialflanschabschnitt (54) aufweist, der bei einer relativen Drehbewegung von Gehäuse (2) und Montageelement (5) zueinander in die Schließposition eingerichtet und ausgebildet ist zum Eintauchen in eine zugeordnete Schlitzaufnahme (25) der Verbindungseinrichtung (V2) des Gehäuses (2), wobei vorzugsweise
der Schließabschnitt (52) des Montageblechs (50) mit dem zumindest einen Radialflanschabschnitt (54) mittels eines axial verlaufenden Verbindungsabschnittes (53) verbunden ist, wobei das zumindest eine Federelement (60) an dem Verbindungsabschnitt (54) angeordnet, insbesondere befestigt ist.

7. Leuchteneinrichtung (1) nach einem der Ansprüche 1 bis 6, **dadurch gekennzeichnet, dass** das Montageblech (50) als Abschnitt von dessen Verbindungseinrichtung (V1) einen radial nach außen ragenden Anschlag (56) aufweist, welcher mit einem am Gehäuse (2) als Abschnitt von dessen Verbindungseinrichtung (V2) ausgebildeten Gegenanschlag (27) zusammenwirkt zur Festlegung einer relativen Drehbeschränkung und/oder zur Festlegung der Schließposition zwischen Gehäuse (2) und Montageelement (5).

8. Leuchteneinrichtung (1) nach einem der Ansprüche 3 bis6, **dadurch gekennzeichnet, dass** das Gehäuse (2), das Montageelement (5) und das Federelement (60) ein jeweiliges elektrisch leitendes Material umfassen, und dass das Montageelement (5) und/oder das Federelement (60) einen Schutzleiteranschluss zum Anschluss an einen Schutzleiter des Versorgungskabels (4) aufweist bzw. aufweisen.

9. Leuchteneinrichtung (1) nach einem der Ansprüche 1 bis 8, **dadurch gekennzeichnet, dass** die Leuchteneinrichtung (1) eine Kühlkörpereinrichtung (6) aufweist, die in dem rohrartigen Gehäuse (2) angeordnet ist und mit der Leuchtmittelanordnung in einem Wärmekontakt zur Ableitung von Abwärme steht, wobei an der Kühlkörpereinrichtung (6) ein elektrisch leitendes Kratzkontaktelement (8) befestigt ist, das sich zur Achse des Gehäuses (2) radial über die Kühlkörpereinrichtung (6) hinaus erstreckt und in Kontakt zur Innenfläche des Gehäuses (2) steht, wobei das Kratzkontaktelement (8) einen Schutzleiteranschluss zum Anschließen eines Schutzleiters des Versorgungskabels (4) aufweist.

10. Leuchteneinrichtung (1) nach einem der Ansprüche 8 und 9, **dadurch gekennzeichnet, dass** der Schutzleiteranschluss des Montageelements (5) elektrisch mit dem Kratzkontakt verbunden ist.

11. Leuchteneinrichtung (1) nach einem der Ansprüche 1 bis 10, **dadurch gekennzeichnet, dass** das Montageblech (50) axial eine zugeordnete Stirnfläche (21) des Gehäuses (2) überragt, wobei vorzugsweise
das Montageelement (5) eine Aufnahme zur Hindurcherstreckung und Befestigung einer Kabeltülle (11) aufweist, durch welche sich das Versorgungskabel (4) erstreckt, und wobei sich die Kabeltülle (11) in Einbaulage in einen Achsenabschnitt hinein erstreckt, in welchem die Verbindungseinrichtungen (V1, V2) des Montageelements (5) und des Gehäuses (2) angeordnet sind.

12. Leuchteneinrichtung (1) nach einem der Ansprüche 1 bis 11, **dadurch gekennzeichnet, dass** die Leuchteneinrichtung (1) als Pendelleuchte ausgebildet ist, wobei das Montageblech (50) in Einbaulage zur axialen Stirnfläche das Gehäuses (2) abgesenkt ist, wobei vorzugsweise die Leuchteneinrichtung (1) zumindest ein Befestigungselement aufweist zur Befestigung zumindest eines Tragseils.

13. Leuchteneinrichtung (1) nach einem der Ansprüche 1 bis 12, **dadurch gekennzeichnet, dass** in Achsenrichtung (A) außen zum Montageelement (5) ein Leuchtendeckel (9) am Montageelement (5) beabstandet befestigt ist zur Bereitstellung einer axialen Schattenfuge (10) zwischen Gehäusestirnfläche (21) und Leuchtendeckel (9), wobei das Montageblech (50) etwa in axialer Höhe der Schattenfuge (10) angeordnet ist.

14. Leuchteneinrichtung (1) nach einem der Ansprüche 1 bis 11, **dadurch gekennzeichnet, dass** die Leuchteneinrichtung (1) als Deckenleuchte ausgebildet ist, wobei das Montageblech (50) zumindest eine Axialdurchführung zur Aufnahme eines in Einbaulage sich axial erstreckenden Befestigungselements zur Befestigung des Montagebleches (50) an einem Träger, insbesondere einer Decke eines Bauwerks aufweist.

15. System, umfassend eine Leuchteneinrichtung (1) nach Anspruch 13, sowie ein flaches Werkzeugelement (90, 100) mit einem Griffabschnitt (91, 101) und einem Anlageabschnitt (92a) zum Eingriff in die Schattenfuge (10), wobei ein radial außenliegender Umfangsabschnitt des Montageelements (5) und der diesem zugeordneter Anlageabschnitt des Werkzeugs in Anlage und Eingriff bringbar sind zum Aufbringen eines Drehmoments auf das Montageblech (50), wobei vorzugsweise
das Werkzeugelement (90) sichelartig ausgebildet ist mit einem sich zu einem Sichelabschnitt (92) des Werkzeugelements (90) innenliegenden Anlageabschnitt (92a) und einem sich von einem freitragenden Endabschnitt des Sichelabschnittes (92) des Werkzeugelements (90) radial nach innen verlaufenden Vorsprung (93), wobei das Montageblech (50) an seinem Umfang eine nach innen verlaufende Ausklinkung (57) aufweist zur Aufnahme des nach innen verlaufenden Vorsprungs (93) des Werkzeugelements (90),
oder dass
das Werkzeugelement (100) gabelartig ausgebildet ist mit zwei zueinander beabstandeten, im Wesentlichen parallel verlaufenden Gabelzinken (102a, b), die eine Gabelaufnahme mit einer Gabelweite festlegen, welche an den Abstand von zugeordneten Umfangsflächen des Montageelements (5) angepasst sind zur abschnittsweisen Aufnahme des Montageelements (5) in die Gabelaufnahme.
